# EUROPEAN PATENT SPECIFICATION

(11) **EP 2 639 162 B1**
(45) Date of publication and mention of the grant of the patent: **10.02.2016**
(21) Application number: 10809232.1
(22) Date of filing: 12.11.2010
(51) Int. Cl.: B64G 1/50, F28D 15/02, F28D 15/04, F28D 15/06

(54) **STARTER HEATER FOR A THERMAL CONTROL DEVICE**
ANLAUFHEIZELEMENT FÜR THERMALKONTROLLVORRICHTUNG
ELEMENT DE CHAUFFAGE DE DEMARRAGE POUR DISPOSITIF DE CONTROLE THERMIQUE

(43) Date of publication of application: 18.09.2013
(73) Proprietor: Ibérica del Espacio, S.A., 28015 Madrid (ES)
(72) Inventor: MISHKINIS, Donatas, E-28010 Madrid (ES); TORRES SEPÚLVEDA, Alejandro, E-28010 Madrid (ES)
(74) Representative: Hano, Christian
(86) International application number: PCT/ES2010/070729
(87) International publication number: WO 2012/062938

(56) References cited:
- FR-A1- 2 813 662
- GB-A- 1 368 100
- US-A- 4 465 458
- US-A- 5 303 768
- US-B1- 6 634 864

## Description

### FIELD OF THE INVENTION

The present invention relates to an evaporator comprising a start-up heater used in a thermal control device controlling a heat source temperature, particularly for use on a spacecraft.

### BACKGROUND

Most of the components and subsystems of a spacecraft must operate in restricted temperature ranges. This makes thermal control a key matter in the design and operation of a spacecraft with a significant weight, power and cost impact in the overall spacecraft budgets.

Spacecraft thermal control relies on the global spacecraft thermal balance: the heat loads must be rejected to deep space that works as a thermal sink. Since no matter links this sink and the spacecraft, this rejection is made by thermal radiation through dedicated radiators installed on the satellite external surfaces.

Spacecraft thermal loads come from the internal spacecraft equipment dissipation and, externally, from the sun and the earth or from the celestial bodies around which the spacecraft orbits. The thermal systems used in spacecrafts must therefore be able to control equipment which operates at a high temperature and also discontinuously.

At present, known thermal devices for controlling thermal loads in spacecraft are two phase heat transfer loops which are also known in engineering practice as loop heat pipes, capillary pumped loops, mechanically pumped loops or heat loops, as for example those shown in PCT/ES2008/070181. Also, heat pipes are known as thermal devices for spacecraft. The purpose of these known devices in a spacecraft is to transfer heat between a heat source (for instance, an electronic element) and a heat sink (for instance, a cold plate). In the two most common devices for controlling thermal loads in a spacecraft, which are two phase heat transfer loops and heat pipes, heat is transferred through an evaporation-condensation cycle of a working fluid kept inside a hermetically sealed container. However, two phase heat transfer loops have several specific and distinguishing features in operation, compared to heat pipes: one of such specific features is the start-up behaviour. Heat pipes usually start immediately without the need of any start-up device, since the vapour-liquid interface is always present in the heat pipe evaporator (special cases where, for instance, solid phase or only vapour phase are present, are not considered), heat transfer due to the phase change happening straightaway as soon as heat is applied to the heat pipe evaporator.

However, starting in two phase heat transfer loops often requires a start-up device, the start-up issue being much more complex. In general, start-up depends on a number of factors, such as:
- the liquid and vapour distribution in the evaporator compensation chamber, depending on:
   o the working fluid amount, the fill liquid level in the evaporator and in the compensation chamber having critical influence on the start-up of the two phase heat transfer loop;
   o the previous history, such as previous short-down and preconditioning processes and manipulation (movement, rotation, stresses, etc.) of the two phase heat transfer loop;
   o the orientation of the two phase heat transfer loop components (evaporator, compensation chamber, condenser) in gravity (or other accelerating force) field; it is also very important to mention the high difficulty involved in the prediction of the fluid distribution in 0-g conditions being, in consequence, practically impossible to forecast the two phase heat transfer loop scenario if there is no preconditioning procedure (including the start-up heater as the most efficient method), prior to the application of the main power to the evaporator;
- the geometry of the two phase heat transfer loop elements: size, shape and number of vapor collecting and removing grooves in the design of the evaporator, wick design and parameters, length, diameters and internal design of vapor and liquid lines, design of the condenser, design of the compensation chamber, presence and properties of a secondary wick, etc.
- heat input power: usually, start-up is more reliable and has smaller temperature overshooting at high input power;
- heat sink temperature;
- thermo-physical and chemical properties of the working fluid;
- ambient conditions and thermal insulation of the two phase heat transfer loop components;
- non-condensed gas presence and amount, since non-condensed gas can influence the boiling process in the vapor grooves, stimulating start-up, though non-condensed gas can prevent start-up if it is collected in the wick or/and in the evaporator wick core;
- the evaporator mass or payload.

All the above factors lead to different scenarios of start-up. It can be easy and immediate the beginning of liquid circulation without any temperature overshooting: as soon as power is applied to the evaporator, the temperature increases gradually up to certain steady-state level; this type of start-up is characterized by an initial distribution of the working fluid in the loop when vapor removing grooves and the vapor line are empty of liquid. Also, the start of the two phase heat transfer loop can be associated with long time and significant increase of the evaporator temperature until the circulation starts and the evaporator temperature (heat source) decreases to a steady-state value. This start-up temperature increase can lead to unsuccessful start-up if the upper temperature limit for the two phase heat transfer loop (or for the cooled equipment) is reached during the process. Such difficult start-ups can happen when the liquid phase stays in the vapor removing grooves in the evaporator and in the vapor line. In such a case, vapor bubbles (boiling) have to be generated in the vapor removing grooves in the evaporator to push liquid out of the evaporator and into the condenser. However, the boiling process has a stochastic nature and a different temperature overshoot for liquid above the saturation state can be needed for different cases. Usually, the required overheating is not very high (several degrees Celsius). However, the worst case of the working fluid distribution occurs when the vapor removing grooves in the evaporator are filled with liquid and the wick central core is filled with vapor. In that situation, it is difficult to reach liquid overheating in the vapor removing grooves, since heat is coming through the liquid saturated wick into the wick central core where evaporation takes place. The evaporated fluid is condensed in the compensation chamber, leading to small differences between the temperature of the saturated liquid in the wick close to the central core and the temperature of the superheated liquid in the vapor removing grooves in the evaporator.

To solve the problem of the difficult start-up in two phase heat transfer loops, different solutions have been proposed in the state of the art, as will be further described.

The most common solution is the installation of dedicated small high heat flux density start-up heaters on the evaporator body. The start-up heater can create high local temperature overshoot on the wall of evaporator that serves to generate the first bubble in the corresponding point inside the evaporator. The disadvantage of this method is related to the heater allocation. As a rule, the evaporator comprises a special aluminum saddle for a better thermal interface contact arrangement with the heat source. Thus, the start-up heater is usually installed on this saddle, being rather difficult to provide concentrated heat input into the evaporator vapor removing grooves, since the interface aluminum saddle is functioning as an effective thermal spreader. Moreover, this leads to the increase of the start-up heater power budget, which is a critical issue in space applications, since only part of the power applied to the start-up heater is dedicated for start-up, another part being lost on the heating of the evaporator main body (including the saddle), due to the inefficient way of installation of the heater. Also, flexible Kapton polyimide heaters are typically used, having heat flux densities limitations from suppliers providing said heaters, the required heat flux for start-up not being provided.

Another popular approach for space applications is the installation of a Peltier element (thermoelectric cooler) on the evaporator (hot side) or on the compensation chamber (cold side). This method usually guarantees better start-up performance of the two phase heat transfer loop because additional cooling of the compensation chamber is provided. This effect helps to fill the compensation chamber and the evaporator central core with condensed liquid, creating higher temperature drop between the compensation chamber (evaporator central core) and the evaporator body, finally facilitating a first bubble generation in the vapor removing grooves in the evaporator. However, this known method maintains the disadvantage of the first solution cited (start-up heater), since the Peltier element has to be allocated on the evaporator aluminum saddle. Moreover, the reliability of the Peltier element can be an issue for space applications because the numerous bimetallic joints needed in this case can be a source for a possible failure of the device. Also, this approach can be used only if the two phase heat transfer loop compensation chamber is placed relatively close to the evaporator because an effective thermal link has to be guaranteed between the Peltier element and the compensation chamber / evaporator.

Also, there exist a couple of other, less popular, two phase heat transfer loop start-up known solutions in the state of the art, such as:
- placing a heater on the compensation chamber: this is used for the preconditioning of the two phase heat transfer loop prior to applying the main power to the evaporator; this method provides a certain initial distribution of the working fluid in the two phase heat transfer loop but is time and power consuming, and does not guarantee a reliable start up;
- placing a capillary starter pump or an additional small capillary pump (secondary evaporator), between the compensation chamber and the vapour line, heating power being equal to heat leaking between the main evaporator and the compensation chamber (known as advanced loop heat pipe concept), such extra pump being intrinsically robust and tolerant to high superheat; however, this technology leads to a higher complexity of the two phase heat transfer loop design, to a lower reliability and to a significantly bigger cost of the device: for this reason, such a solution is only applicable to multi-evaporator/condenser systems, which are under development at present, and which are not applied in thermal control for space applications (only experiments have been effected in this regard, up to now).

As a summary, the problems of known start-up devices are the following:
- it is not known when the start-up has to be made;
- it is not known how effectively the start-up is made;
- the start-up is not well controlled;
- when applying small power, heat goes to the mass of the equipment of the two phase heat transfer loop, but not to the working fluid, so start-up is not effected.

The start-up heater for thermal control devices of the present invention comes to solve the above-mentioned drawbacks.

FR 2 813 662 A1 discloses an evaporator comprising a housing with an inlet tube for a heat transfer liquid, a vapor outlet tube, a microporous mass inside the housing separating liquid collection and evaporation volumes, and a metal cover plate in contact with a component to be cooled. The housing is made from material with low thermal conductivity. The microporous mass is made of a plastic material which can optionally contain a charge of a material with low thermal conductivity.

US 6 634 864 B1 discloses a capillary pump provided for producing pressurized vapor emissions. The pump has various layers that assist in creating optimal conditions to accomplish a high maximum fluid flow rate and pressurization. Heat and liquid/vapor flows in opposing directions in pathways within the layers. The pump includes a vaporization layer having small-sized pores and with a thickness and area to reduce viscous drag of flowing liquid and vapor. An ejection layer is also included having one or more openings and an integrated heat transfer portion for conveying heat and providing a low fluidic drag area. The pump may include an insulation layer to shield the liquid in a supply area from heat and/or a preheat layer to raise the temperature of the liquid prior to the liquid entering the vaporization layer. A coating at least partially surrounds the outer surfaces of the pump to allow vapor pressure to increase.

GB 1 368 100 A discloses a heat transfer device comprising means defining an evacuated gas tight chamber. In the chamber a heat source is disposed. Further a porous wick structure saturated with a volatile fluid is disposed in the chamber and extends from the vicinity of the heat source to a location in the chamber away from the heat source.

US 4 465 458 A discloses an evaporator being adapted to effect evaporation of a working fluid in an evaporation-condensation cycle. A heater comprises one thermally conductive cartridge as a first thermally conductive envelope, in the inside of which a heating element of the evaporator is kept, the at least one conductive cartridge being directly inserted into a groove of the evaporator for providing direct thermal interface between the working fluid and the heating element.

US 5 303 768 discloses an evaporator comprising vapor grooves for a thermal control device controlling thermal loads in a spacecraft.

### SUMMARY OF THE INVENTION

As it has been mentioned, currently used start-up heaters in thermal control devices are mainly located in the external part of the thermal control devices, providing an inefficient installation in which a high heat flux density heater is needed.

The object of the present invention is therefore to provide a more efficient evaporator including a start-up heater for a thermal control device such that this start-up heater is integrated in the evaporator of said thermal control device.

This object is achieved by an evaporator comprising the features of claim 1. Preferred embodiments of the evaporator of the invention are claimed in claims 2 to 8.

According to the invention, at least one conductive cartridge, made of a metallic material, the cartridge comprising inside a heating element, is inserted into at least one of the vapour removing grooves of the evaporator in the thermal control device. The cartridge comprises a conductive envelope in the section of which a heating element is kept, the conductive envelope being preferably in the form of a cylinder having a small diameter, which is directly inserted into at least one of vapour removing grooves of the evaporator and is welded into the body of the evaporator to provide a leak proof joint. Several heaters for several vapour-removing grooves in the evaporator of the thermal control device can also be used.

With the solution of the invention, direct thermal contact between the heating element and the working fluid in the evaporator is provided, thus being provided a system with a very high thermal efficiency, as heat is directly applied where it is needed.

The features, objects and advantages of the invention will become apparent by reading this description in conjunction with the accompanying drawings.

### BRIEF DESCRIPTION OF DRAWINGS

Figure 1 shows typical temperature profiles of an evaporator and a condenser in a two-phase heat transfer loop according to the prior art during start-up with temperature overshoot, also showing the corresponding fluid distribution inside the evaporator of the two-phase heat transfer loop prior to this type of start-up.
Figure 2 shows typical temperature profiles of an evaporator and a condenser in a two-phase heat transfer loop according to the prior art during start-up without temperature overshoot, also showing the corresponding fluid distribution inside the evaporator of the two-phase heat transfer loop prior to this type of start-up.
Figure 3 shows a schematic view showing the components in a two phase heat transfer loop comprising an external start-up heater, according to the prior art.
Figure 4 shows a schematic view showing the components of a two phase heat transfer loop comprising a start-up heater, according to the present invention.
Figure 5 shows a cross section A-A of the schematic view showing the components of a two phase heat transfer loop comprising a start-up heater illustrated in Figure 4, according to the present invention.

### DETAILED DESCRIPTION OF PREFERRED EMBODIMENTS

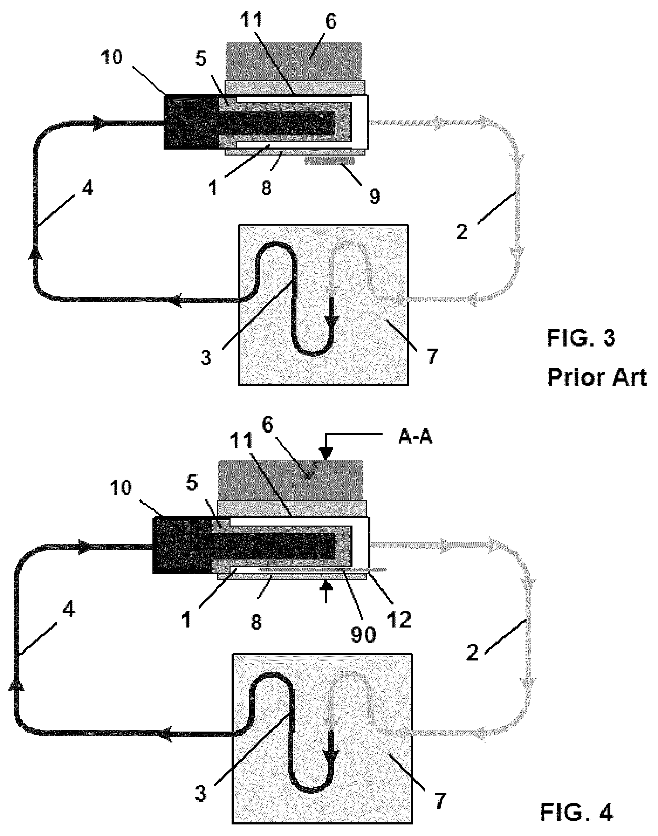

The present invention provides a start-up heater 90 used in a thermal control device controlling the temperature of a heat source 6, particularly for use on a spacecraft. The thermal control device in which the start-up heater 90 of the invention is used is preferably a two phase heat transfer loop, as showed in Figure 3.

The spacecraft thermal loads represented by the heat source 6 come from the internal spacecraft equipment dissipation and, externally, from the sun and the earth or from the celestial bodies around which the spacecraft orbits.

A two phase heat transfer loop operates as a hermetically sealed container acting as a thermal device, controlling thermal loads in a spacecraft, such that these devices transfer heat between a heat source 6 and a heat sink (typically the space) by means of an evaporation-condensation cycle of a working fluid which is kept inside the container. A two phase heat transfer loop according to the prior art is shown in Figure 3, comprising a start-up heater 9, which is placed outside the body of the evaporator 11. To provide thermal and mechanical interface between the heat source 6 and the 11, a high thermally conductive metallic saddle 8 is usually used. A capillary pump 5 inside the evaporator 11 provides the two phase (liquid and vapor) fluid circulation of the working fluid within the two phase heat transfer loop, which therefore comprises a liquid line 4 and a vapor line 2. The two phase heat transfer loop also comprises a heat rejection system, preferably a condenser 3 attached to a radiator 7, closing the thermal control circuit of the working fluid. To accommodate changes of working fluid volume with variations of ambient temperatures and input power a special volume, called compensation chamber 10 is typically integrated into the two-phase heat transfer loop. The compensation chamber 10 can be installed in different places of the fluid circuit. If the compensation chamber 10 is part of the evaporator 11 (as it is shown in Figures 3 and 4), the two-phase heat transfer loop is then called loop heat pipe.

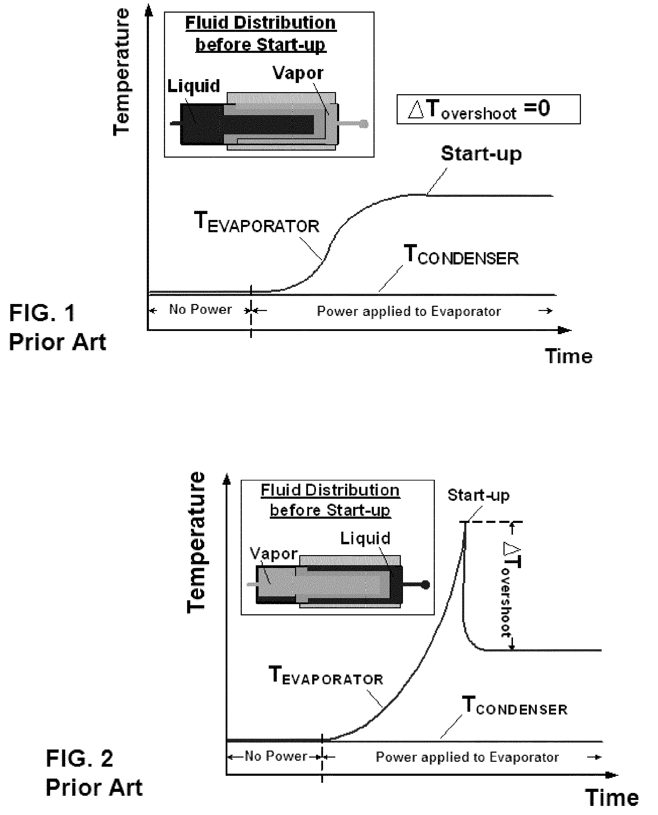

As it has previously been explained, different scenarios can occur in the start-up of a two-phase heat transfer loop according to the prior art. It can be easy and immediate the beginning of liquid circulation without any temperature overshooting and, as soon as power is applied to the evaporator 11, the temperature increases gradually up to certain steady-state level; this type of start-up is characterized by an initial distribution of the working fluid in the loop when vapor removing grooves 1 and the vapor line 2 are empty of liquid, as shown in Figure 1. In the upper left part of Figure 1, the working fluid distribution in the evaporator 11 before start-up is shown. Also, the start of the two phase heat transfer loop can be associated with long time and significant increase of the evaporator 11 temperature until the circulation starts and the evaporator 11 temperature decreases to a steady-state value, as it is shown in Figure 2.

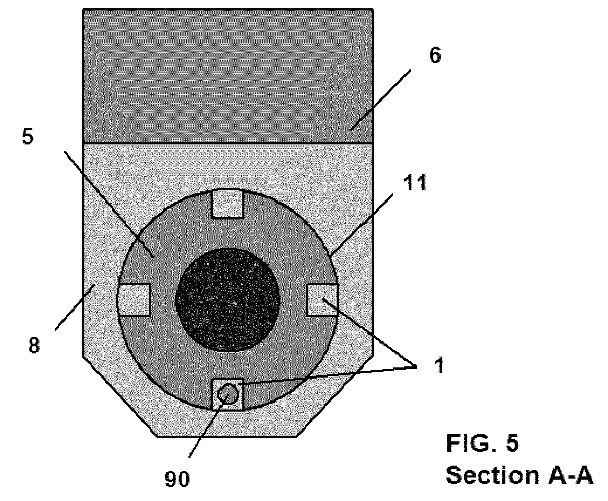

According to the invention, as shown in Figure 4, a two phase heat transfer loop is provided in which a start-up heater 90 is integrated within the internal structure of the evaporator 11. The start-up heater 90 of the invention is placed into at least one of the vapor removing grooves 1 of the evaporator 11. A cross section A-A in the evaporator 11 of Figure 4 is shown in Figure 5, for a better understanding of the invention.

The start-up heater 90 of the invention comprises at least one conductive cartridge, preferably made of a metallic material, the cartridge comprising inside a heating element. This start-up heater 90 is inserted into at least one of the vapour removing grooves 1 of the evaporator 11.

The cartridge comprises a conductive envelope inside of which a heating element is kept, the conductive envelope being preferably in the form of a cylinder having a small diameter, which is directly inserted into at least one of vapour removing grooves 1 of the evaporator 11, and being welded or soldered at joint points 12 into the body of the evaporator 11 to provide a leak proof joint. Although the shape of the cartridge is preferably that of a cylinder, any other shape is also valid, such as square sections, rectangular sections, etc. Several start- up heaters 90 for several vapour-removing grooves 1 in the evaporator 11 can also be used if needed.

According to a second embodiment of the invention, the cartridge comprises an envelope, into which the heating element is kept, this cartridge being inserted into another conductive envelope, preferably made of a metallic material, this second envelope being soldered or welded into at least one of the vapour removing grooves 1 of the evaporator 11, this second envelope copying the external shape of the first envelope of the cartridge. This second embodiment has the advantage that the cartridge together with the heating element inside it can be easily replaced when needed, without having to effect any further modification in the evaporator 11.

In both embodiments of the invention, a direct thermal contact between the heating element in the start-up heater 90 and the working fluid is provided. The vapour removing grooves 1 in the evaporator 11 typically have a rectangular or a square cross section with dimensions around 1 x1 mm (square section) or 1 mm external diameter. That is why miniature cartridge, comprising the heating element inside, having a diameter of 0,8 mm or less have to be used. The start-up heater 90 according to the invention allows to secure the start-up of the evaporator 11 in the two phase heat transfer loop, since temperature overshoots have no influence on the evaporator 11 because all heat is directly applied to the working fluid. In the start-up heater 90 of the invention, it was demonstrated that less than 1 Watt power was needed to guarantee the start-up event in the evaporator 11 for 100% of attempts effected. However, the same two phase heat transfer loop system would need 10 Watt power in the external start-up heater 9 in order to provide a 90% approximately of start-up events in the evaporator 11.

Although the present invention has been fully described in connection with preferred embodiments, it is evident that modifications may be introduced within the scope thereof, not considering this as limited by these embodiments, but by the contents of the following claims.

## Claims

1. Evaporator for a thermal control device controlling thermal loads in a spacecraft by an evaporation-condensation cycle of a working fluid which is kept inside the mentioned thermal control device, the evaporator (11) being adapted to effect evaporation of the working fluid in the evaporation-condensation cycle, the evaporator (11) comprising vapor grooves (1) within its internal structure, **characterised in that** the evaporator comprises a heater (90) comprising at least one thermally conductive cartridge as a first thermally conductive envelope, in the inside of which a heating element for effecting start-up of the evaporator (11) is kept, the at least one conductive cartridge being directly inserted into at least one of the vapor grooves (1) of the evaporator (11) for providing a direct thermal interface between the working fluid and the heating element, wherein the conductive cartridge is made of a metallic material, and wherein the cartridge is welded at joint points (12) in the vapor grooves (1) of the body of the evaporator (11), providing a leak proof joint.

2. Evaporator according to claim 1, further comprising at least one second thermally conductive envelope into which the at least one conductive cartridge is removably inserted, this second conductive envelope being directly inserted into at least one of the vapor grooves (1) of the evaporator (11).

3. Evaporator according to claim 2, wherein the second conductive envelope is made of a metallic material.

4. Evaporator according to claim 3, wherein the second metallic envelope is welded at joint points (12) in the vapour grooves (1) of the body of the evaporator (11), providing a leak proof joint.

5. Evaporator according to any of the previous claims, wherein the conductive cartridge has a circular cross section and an external diameter of less than 1 mm.

6. Evaporator according to any of claims 1-4, wherein the conductive cartridge has a rectangular cross section less than 1 mm x 1 mm, externally.

7. A two phase heat transfer loop thermal control device for controlling thermal loads in a spacecraft comprising an evaporator according to one of the previous claims.

8. Spacecraft comprising a two phase heat transfer loop thermal control device according to claim 7.

## Patentansprüche

1. Verdampfer für eine thermische Steuervorrichtung zur Steuerung von thermischen Belastungen in einem Raumfahrzeug durch einen Verdampfungs-Kondensations-Zyklus eines Arbeitsfluids, das innerhalb der erwähnten thermischen Steuervorrichtung gelagert ist, wobei der Verdampfer (11) dazu ausgelegt ist, die Verdampfung des Arbeitsfluids in dem Verdampfungs-Kondensations-Zyklus zu bewirken, wobei der Verdampfer (11) Dampfnuten (1) in seinem Innenaufbau aufweist, **dadurch gekennzeichnet, dass** der Verdampfer eine Heizvorrichtung (90) aufweist, die wenigstens einen thermisch leitenden Einsatz als einen ersten thermisch leitenden Mantel aufweist, in dessen Inneren ein Heizelement zum Bewirken eines Startvorgangs des Verdampfers (11) gelagert ist, wobei der wenigstens eine Einsatz direkt in wenigstens eine der Dampfnuten (1) des Verdampfers (11) eingeführt ist, um eine direkte thermische Schnittstelle zwischen dem Arbeitsfluid und dem Heizelement bereitzustellen, wobei der leitende Einsatz aus einem metallischen Material hergestellt ist und wobei der Einsatz an Verbindungspunkten (12) in den Dampfnuten (1) des Körpers des Verdampfers (11) verschweißt ist, wodurch eine leckagesichere Verbindungsstelle bereitgestellt ist.

2. Verdampfer nach Anspruch 1, der weiterhin wenigstens einen zweiten thermisch leitenden Mantel aufweist, in den der wenigstens eine leitende Einsatz entfernbar eingesetzt ist, wobei der zweite leitende Mantel direkt in wenigstens eine der Dampfnuten (1) des Verdampfers (11) eingeführt ist.

3. Verdampfer nach Anspruch 2, bei dem der zweite leitende Mantel aus einem metallischen Material hergestellt ist.

4. Verdampfer nach Anspruch 3, bei dem der zweite metallische Mantel an Verbindungspunkten (12) in den Dampfnuten (1) des Körpers des Verdampfers (11) verschweißt ist, wodurch eine leckagesichere Verbindungsstelle bereitgestellt ist.

5. Verdampfer nach irgendeinem der vorhergehenden Ansprüche, wobei der leitende Einsatz einen kreisförmigen Querschnitt und einen Außendurchmesser von weniger als 1 mm hat.

6. Verdampfer nach irgendeinem der Ansprüche 1 bis 4, bei dem der leitende Einsatz äußerlich einen rechteckigen Querschnitt von weniger als 1 mm x 1 mm hat.

7. Thermische Steuervorrichtung zur Zweiphasenwärmeübertragungsregelung für das Steuern von thermischen Belastungen in einem Raumfahrzeug mit einem Verdampfer nach einem der vorhergehenden Ansprüche.

8. Raumfahrzeug mit einer thermischen Steuervorrichtung zur Zweiphasenwärmeübertragungsregelung nach Anspruch 7.

## Revendications

1. Évaporateur destiné à un dispositif de régulation thermique régulant des charges thermiques dans un astronef au moyen d'un cycle d'évaporation-condensation d'un fluide de travail qui est maintenu à l'intérieur dudit dispositif de régulation thermique, l'évaporateur (11) étant conçu pour assurer l'évaporation du fluide de travail au cours du cycle d'évaporation-condensation, l'évaporateur (11) comprenant des cannelures à vapeur (1) au sein de sa structure interne,
**caractérisé en ce que** l'évaporateur comprend un réchauffeur (90) comprenant au moins une cartouche thermoconductrice en tant que première enveloppe thermoconductrice à l'intérieur de laquelle est maintenu un élément chauffant destiné à assurer le démarrage de l'évaporateur (11), ladite au moins une cartouche conductrice étant directement insérée dans au moins l'une des cannelures à vapeur (1) de l'évaporateur (11) pour former une interface thermique directe entre le fluide de travail et l'élément chauffant, dans lequel la cartouche conductrice est constituée d'un matériau métallique,
et dans lequel la cartouche est soudée aux points de jonction (12) dans les cannelures à vapeur (1) du corps de l'évaporateur (11), en formant un joint étanche.

2. Évaporateur selon la revendication 1, comprenant en outre au moins une seconde enveloppe thermoconductrice, dans laquelle ladite au moins une cartouche conductrice est insérée de façon amovible, cette seconde enveloppe conductrice étant directement insérée dans au moins l'une des cannelures à vapeur (1) de l'évaporateur (11).

3. Évaporateur selon la revendication 2, dans lequel la seconde enveloppe conductrice est constituée d'un matériau métallique.

4. Évaporateur selon la revendication 3, dans lequel la seconde enveloppe métallique est soudée aux points de jonction (12) dans les cannelures à vapeur (1) du corps de l'évaporateur (11), en formant un joint étanche.

5. Évaporateur selon l'une quelconque des revendications précédentes, dans lequel la cartouche conductrice présente une section transversale circulaire et un diamètre extérieur de moins de 1 mm.

6. Évaporateur selon l'une quelconque des revendications 1-4, dans lequel la cartouche conductrice présente une section transversale rectangulaire de dimensions extérieures de moins de 1 mm x 1 mm.

7. Dispositif de régulation thermique à boucle de transfert thermique à deux phases, destiné à réguler des charges thermiques dans un astronef comprenant un évaporateur selon l'une des revendications précédentes.

8. Astronef comprenant un dispositif de régulation thermique à boucle de transfert thermique à deux phases selon la revendication 7.
